# EUROPEAN PATENT APPLICATION

(11) **EP 1 477 915 A2**
(43) Date of publication of application: **17.11.2004**
(21) Application number: 04252844.8
(22) Date of filing: 17.05.2004
(51) Int. Cl.: G06F 17/30

(54) **System and method of data modelling**

(30) Priority: 16.05.2003 CA 2429095
(71) Applicant: Cognos Incorporated, Ottawa, Ontario K1G 4k9 (CA)
(72) Inventor: Potter, Charles Mike, Nepean Ontario K2G 6H4 (CA); Vierich, Ralf, Kanata Ontario K2K 1N8 (CA); Dachevski, Boris, Ottawa Ontario K1Y 3M4 (CA)
(74) Representative: Hedley, Nicholas James Matthew

(57) **Abstract**

A system for data modelling is provided. The system comprises a model repository for storing one or more data models, a model partitioning module for segmenting a data model into smaller data models, and a model linking module for connecting two or more data models stored in the model repository.

## Description

### FIELD OF THE INVENTION

The invention relates to a system and method of data modelling.

### BACKGROUND OF THE INVENTION

Metadata modelling allows users to import metadata from one or more data sources and transform it into a business-oriented model that can be used to create reports. When developing a metadata model that is reasonably complex or large it becomes difficult for a single model designer to manage/design the model. A second problem with metadata modelling is one of reuse: A model designer will spend considerable time to develop and refine a metadata model. When a new model is to be created the user must either start from scratch or modify a copy of an existing model. This leads to duplication and maintenance problems since a single underlying database change may require many models to be modified.

The following terminology is used in the art:
Xerces - available as part of the world-wide web consortium (W3C) initiative is an open source code library used to create and manipulate extensible markup language (XML) documents;
XML - W3C standard for a tagged based text language that is toted as revolutionizing the software industry;
DOM - Document Object Model is a memory data-structure that represents an XML document (part of the Xerces implementation);
XPath - XML path language is a World Wide Web Consortium (W3C) standard for specifying a location of an element or part of an XML document;
XLink - XML linking language is a W3C inserting elements into an XML document in order to create and describe links between resources.

### SUMMARY OF THE INVENTION

The invention allows for a method of partitioning and linking data models such that multiple users can participate in data modelling. Each partitioned sub data model can be modified and linked back to the main data model.

In accordance with an embodiment of the present invention, there is provided a system for data modelling. The system comprises a model repository for storing one or more data models, a model partitioning module for segmenting a data model into smaller data models, and a model linking module for connecting two or more data models stored in the model repository.

In accordance with another embodiment of the present invention, there is provided a method of creating a multi-user data model. The method comprises the steps of creating nodes to represent components of the multi-user data model, partitioning the multi-user data model into two or more sub models, and creating links between sub models of the two or more sub models. A partition of the multi-user data model partitioned is created using the steps of selecting a node from the multi-user data model, and separating the node and descendant child nodes of the node into a separate sub model. A link is created using the steps of creating a reference link on a child node of a first sub model, and referencing a node of a second sub model in the reference link.

In accordance with another embodiment of the present invention, there is provided a computer program product for creating a multi-user data model. The computer program product comprises computer readable medium for storing machine-executable instructions for use in the execution in a computer of the integrated installation of a software method. The method includes the steps of partitioning the data model into two or more sub models, creating links to and from the sub models, allowing a sub model to be modified, checking that a modified sub model is compatible with the data model, and updating the modified sub model partition of the data model.

In accordance with another embodiment of the present invention, there is provided a method of partitioning a main data model into two or more sub-data models. The method comprises the steps of creating a new project for storing the sub-data models, copying from the main data model a selected node and its dependent nodes into the new project, removing the selected node and dependent nodes of the selected node from the main data model, and establishing a link to the newly created project.

In accordance with another embodiment of the present invention, there is provided a method of linking a first data model to a second data model. The method comprises the steps of loading the first data model into a virtual document object model, and replacing a leaf node of the virtual document object model with a node of the second data model.

### BRIEF DESCRIPTION OF THE DRAWINGS

Figure 1 shows an example of a data modelling system, in accordance with an embodiment of the present invention.
Figure 2 shows an example of directories (called projects) stored in a model repository, in accordance with the data modelling system.
Figure 3 shows an example of a virtual DOM, in accordance with the data modelling system.
Figure 4 shows in a flowchart an example of a method of partitioning a data model, in accordance with the data modelling system.
Figure 5 shows an example of a multi-user data modelling system, in accordance with an embodiment of the present invention.
Figure 6 shows in a flowchart an example of a method of creating a multi-user data model, in accordance with an embodiment of the present invention.
Figure 7 shows in a flowchart an example of a method of assembling a multi-user data model, in accordance with an embodiment of the present invention.

### DETAILED DESCRIPTION OF THE PREFERRED EMBODIMENTS

A metadata model may persist as an extensible markup language (XML) document. One technology used to open and manipulate an XML document is an open source software called Xerces. When a model (XML document) is loaded into memory it is stored as a document object model (DOM). The DOM is a memory representation of the model XML file.

In one embodiment of the present invention, extensions are made to the DOM implementation to support multiple XML documents as a single DOM that is referred to as a "virtual DOM".

Metadata can be organized in a folder to help in the partitioning of metadata into logical functional areas. For example, all "product" related query subjects could be grouped together in one folder and all "sales branch" and "geographical" query subjects in a different folder. Folders can be "partitioned" off into their own projects and can be manipulated as a stand-alone project. It is also possible to "link" folders from other projects into a main project.

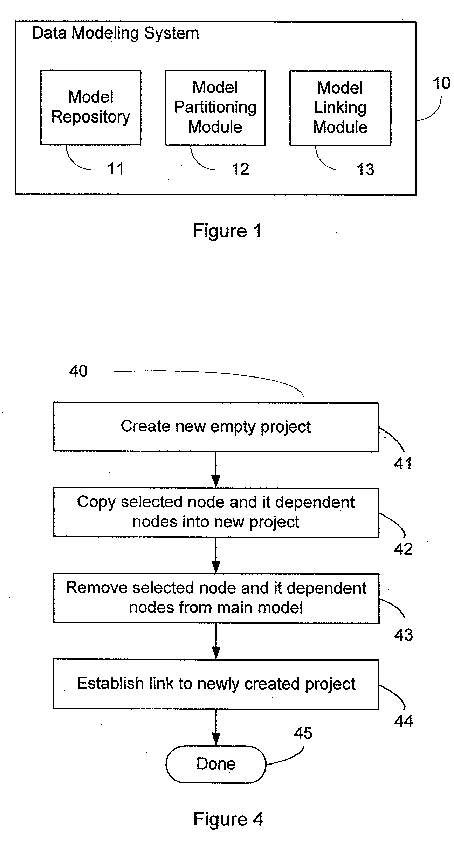

Figure 1 shows an example of a data modelling system 10, in accordance with an embodiment of the present invention. The data modelling system 10 comprises a model repository 11 for storing data models, a model partitioning module 12 for segmenting a data model into smaller data models, and a model linking module 13 for connecting two or more data models together.

The model repository 11 is a storage facility for storing data models, including metadata models. The model repository 11 can be a file storage system. A metadata model application project is a directory that comprises several files, including a data model file (such as a model.xml file) and a model path file (such as a project.cpf file). The model.xml file is an XML document that describes the metadata model. The project.cpf file may be considered a pointer file that comprises a list of XPaths to other models. The project file contains an array of project mappings that specify the parent node and an XPath expression to the child node in a different project model.xml document.

Advantageously, the partitioning and linking abilities of the data modelling system 10 offer the model designer several options:
1) The linking ability allows the model designer to link into a main data model parts of other data models that have already been developed. Thereby saving not only time but also making maintenance easier since there would not be multiple copies of the same model pieces.
2) The model designer can take a relatively complicated model design and partition it into separate problems with the goal being to delegate the modelling exercise to different modellers. Each modeller working on only a small section of the larger model. The small sections can then be linked together.
3) Source control. The partitioning and linking ability also allows the modeller to check in each model segment (sub model) into source control and only check out the portions that are to be changed. Thus, when changing a portion of the data model, the remaining portions of the model do not need to be updated. These advantages will be discussed in greater detail below.

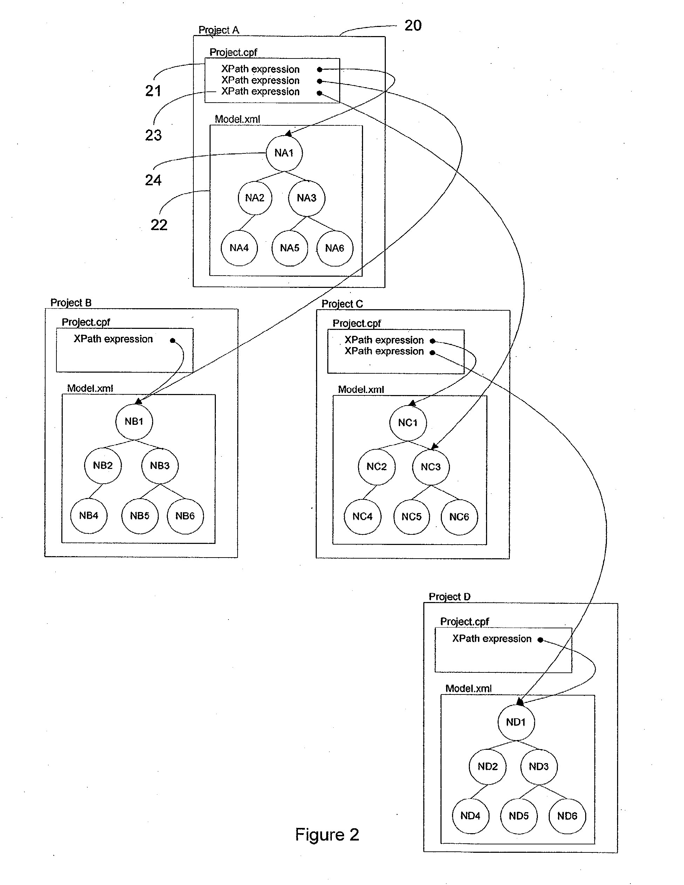

Figure 2 shows an example of directories (called projects 20) stored in a model repository 11, in accordance with the data modelling system 10. The projects 20 (i.e., directories) comprise project.cpf 21 and model.xml 22 files. Preferably, one XPath 23 in a project.cpf file 21 of a project 20 points to the parent node 24 of the metadata model in its model.xml file 22. Other XPaths 23 or Xlinks in a project.cpf file 21 may point to a node in a model.xml file 23 of another project 20. In this example, Project A points to Projects B and C and Project C points to Project D. When Project A is loaded into memory, a virtual DOM is constructed.

An example of an Xlink entry in the .cpf file 21 of a project 20 that contains a link to another project 20 is:

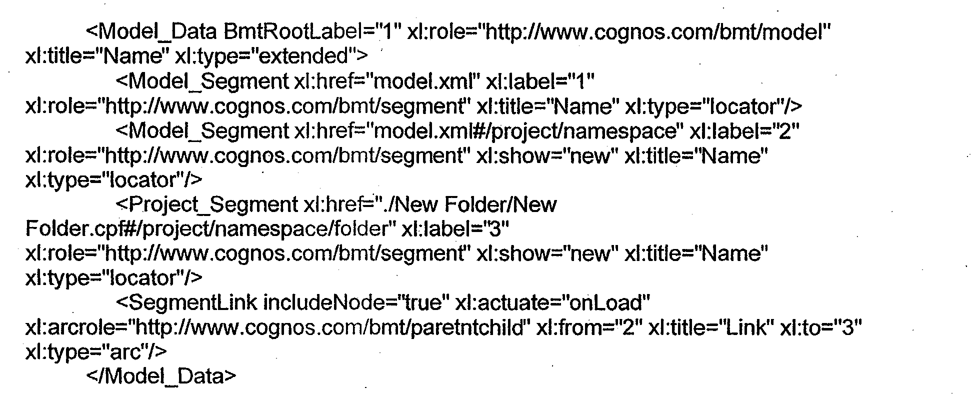

In the "Model_Segment" element, the xl:href attribute specifies the name of the model document 22 and an XPath 24 of the object within the document where the linked object will reside. The xl:label attribute is a way of naming the segment.

In the "Project_Segment" element, the xl:href attribute specifies the location of the project 20 to link to and the xl:label attribute is a way of naming it.

The "SegmentLink" element is the entry that defines the link between the entries mentioned above.

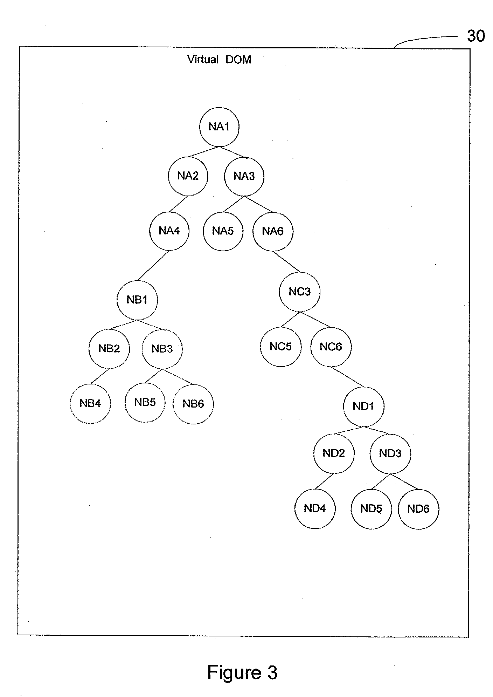

Figure 3 shows an example of a virtual DOM 30, in accordance with the data modelling system 10. The virtual DOM 30 is the union of Projects A, B, C and D as described in the projects 20 of Figure 2. In this example, the first XPath expression 23 in the project.cpf file 21 of Project A contains a reference to the first node 24 (NA1) of the model.xml file 22 of Project A. The second XPath expression 23 of the project.cpf file 21 of Project A links node NA4 of the model.xml file 22 of Project A with the first node 24 (NB1) of the model.xml file 22 of Project B. The third XPath expression 23 of the project.cpf file 21 of Project A links node NA6 of the model.xml file 22 of Project A with node NC3 of the model.xml file 22 of Project C. Note that only the part of project C that was pointed to by project A is included in the virtual DOM 30. The second XPath expression in the project.cpf file 21 of Project C links node NC6 of the model.xml file 22 of Project C with the first node 24 (ND 1) of the model.xml file 22 of Project D.

An embodiment of the model partitioning module 12 is code stored in a computer program product used to create partitions of data models from a DOM of a data model. The model partitioning module 12 comprises code in a computer program product for creating a data model file 22 and for creating a model path file 21. The partitioning action includes several steps.

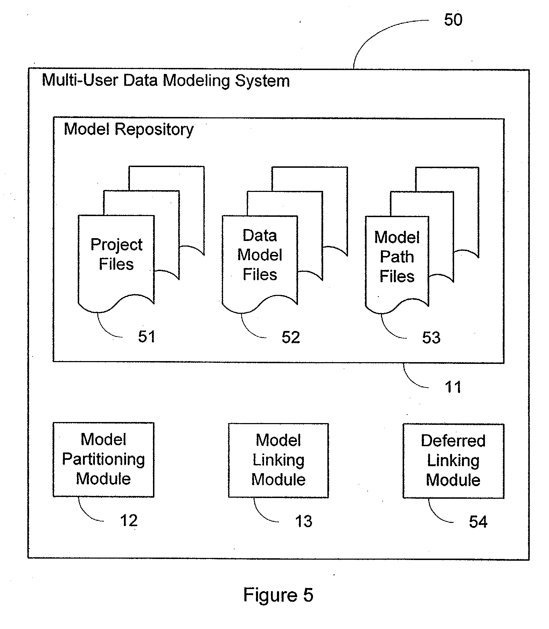

Figure 4 shows in a flowchart an example of a method of partitioning a data model (40), in accordance with an embodiment of the data modelling system 10. First a new empty project is created (41). Then the selected node and all its descendent nodes are copied to the new project (42). Once the copy is complete, the selected node and all descendent nodes are removed from the main model (43). Finally, a link is established to the newly created project and the node reappears back into the main model (44). The method (40) is done (45). A user may determine which nodes are to be partitioned off the main model. Projects may also be sub-partitioned using this method.

An embodiment of the model linking module 13 is code in a computer program product used to link data models together. The model linking module 13 comprises code for specifying an XPath link 23 in a model path file 21. For example, when a user wants to link to a folder from another model, the user would first select a parent folder from the current (main) node under which they want the newly linked folder to appear. The "Link Model" action invokes a series of dialogs that allows the user to select the project directory of the model to which they want to link, based on that list of eligible folders and namespaces to which they can link. Once the user has selected the desired folder the host application constructs an XPath and a connection string that represents the target model and object within the model. These XPath and connection strings are used to load that fragment of the model into the current (virtual) DOM.

Advantageously, the data modelling system 10 allows a user to take a large document (metadata model) and break it up into smaller documents that can then be worked on independently. It is, however, possible for the people working on the smaller 'sub' models to introduce conflicts that may only be noticeable with the larger 'main' model.

In order to help the main model remain consistent, the data modelling system 10 may further comprise a deferred linking module for preserving the integrity of the main model. A modeller may impose rules or constraints on the segments of the main model. For example, all object namespaces must be unique. Consistency checks involve checking to ensure that newly created segments, or updated segments, comply with the rules or constraints. The deferred linking module comprises a link call-back function that is called to perform consistency checks on the segment (project) before being linked into the main model.

Consistency checks help to ensure that the project is compatible with the main model and all segments already linked into the main model. If something is found to be incompatible in the segment model then a user can immediately repair the segment model, or alternatively, an error message can be displayed and the segment linking can be skipped (left out of the main model). For example, if an updated segment contains a newly created object with a namespace that is identical to a namespace already used in another segment of the main data model, an error message may appear. Additionally, before linking the updated segment to the main model, a user can rename the namespace of the newly created object.

Figure 5 shows an example of a multi-user data modelling system 50, in accordance with an embodiment of the present invention. The multi-user data modelling system 50 comprises a model repository 11, a model partitioning module 12, a model linking module 13 and a deferred linking module 54 for performing consistency checks on model documents (or files). The model repository 11 stores one or more project files 51, one or more data model files 52, and one or more model path files 53. The project files 51, data model files 52, and model path files 53 are described above.

Advantageously, by having an entire data model loaded into memory in a virtual DOM, the data modelling system 10 and multi-user data modelling system 50 each assist a user to isolate the application from the details of the physical location of the corresponding XML documents. By using the model-segmenting feature 12 a model designer can partition that modelling project into smaller modelling projects in such a way that more than one model designer can work on individual pieces of a much larger modelling project at the same time. Each individual piece of a larger modelling project may be stored separately. Relationships may be made across files (or areas). That is, although the models may show a nicely structured tree diagram, there may be references from some nodes to other nodes. Database tables may be represented as "query subjects" and database joins may be represented as "relationships". "Query subjects" exist in folders and can be located in one or more segments. A "relationship" object may be an object that expresses an association between query subjects and can also be located anywhere in the model (or segments). Objects with a particular segment may reference objects that are in different segments. Some segments may only have valid references when loaded as part of a larger project.

Furthermore, customers may add models to canned solutions. Updates on the canned solutions may be made without affecting the customer added sub-models. The model linking feature 13 allows the model designer to link in parts of other modelling projects into their modelling projects.

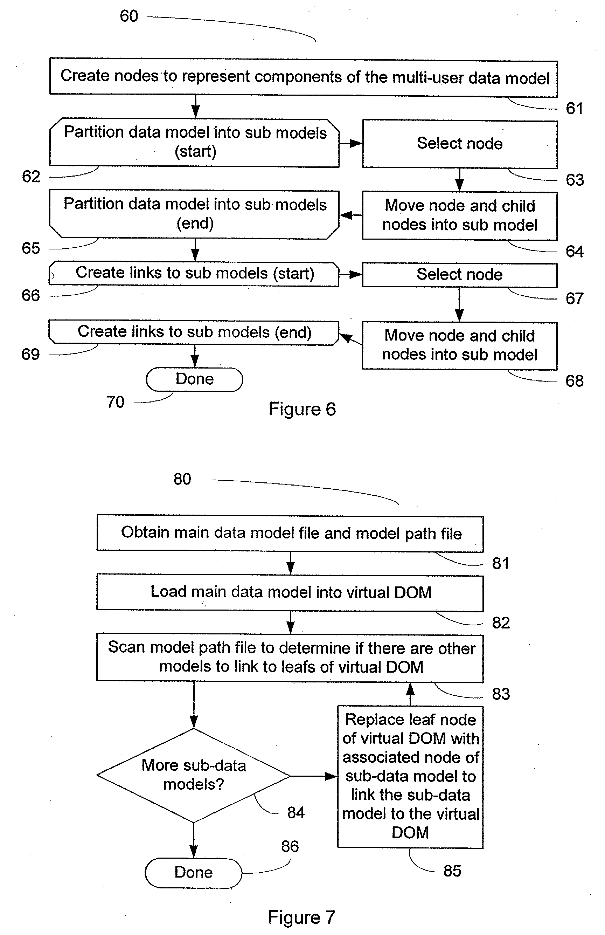

Figure 6 show in a flowchart an example of a method of creating a multi-user data model (60), in accordance with an embodiment of the present invention. The method begins with creating nodes to represent components ofthe multi-user data model (61). Next, the multi-user data model is partitioned (or segmented) into sub-data models (62). The partitions are created when a node is selected (63), and the node and all descendant child nodes of the node are removed from the data model. A sub-data model is thus created comprising the removed node and its descendant child nodes (64). Multiple sub-data models may be created (65). Next, links to the sub-data model are created (66). This step (66) involves creating a reference link on a node of a first sub-data model (67) and referencing a node of a second sub-data model in the reference link (68). In one example of creating a link, a model path file is created and XPaths are listed in the model path file. Once links are created for each sub-data model (69), the method is done (70). Each sub-data model may be updated individually by different users and linked together in a virtual DOM, as described above.

Figure 7 shows in a flowchart an example of a method of assembling a multi-user data model (80), in accordance with an embodiment of the present invention. The method begins with obtaining a main data model file and its model path file (81). The main data model is loaded into a virtual DOM (82). The model path file is scanned to determine if there are other models to link to leafs of the current virtual DOM (83). This determination comprises scanning the XPath expressions found in the model path file. For each sub-data model to be linked (84), the leaf node of the virtual DOM is replaced with the parent node of the corresponding sub-data model (85). This links the sub-data model to the virtual DOM. Steps (83) to (85) are repeated for each model path file of the linked sub-data models. Once there are no further links to add to the virtual DOM (86), the method is done (87). Other steps may be added to this method, including modifying or updating a sub-data model and performing consistency checks on the sub-data model.

This specification describes a data modelling feature referred to as model linking and segmenting. Although in one embodiment the system is implemented as a data-modelling tool, the modelling linking and segmenting concept applies to many other implementations.

The data modelling system 10 and the multi-user data modelling system 50 according to the present invention, and the methods described above, each may be implemented by any hardware, software or a combination of hardware and software having the functions described above. The software code, either in its entirety or a part thereof, may be stored in a computer program product (including a computer readable memory). Further, a computer data signal representing the software code that may be embedded in a carrier wave may be transmitted via a communication network. Such a computer program product and a computer data signal are also within the scope of the present invention, as well as the hardware, software and the combination thereof.

While particular embodiments of the present invention have been shown and described, changes and modifications may be made to such embodiments without departing from the true scope of the invention.

## Claims

1. A system for data modelling, the system comprising:
a model repository for storing one or more data models;
a model partitioning module for segmenting a data model of the one or more data models into smaller data models; and
a model linking module for connecting two or more data models of the one or more data models.

2. The system as claimed in claim 1, wherein the model repository includes directories having:
one or more data model files; and
one or more model path files; and optionally wherein:
the data model files are extensible markup language files; and
the model path files are a collection of extensible markup language XPath links.

3. The system as claimed in claim 1, wherein the model partitioning module includes code for creating a data model file and for creating a model path file.

4. The system as claimed in claim 1, wherein the model linking module includes code for specifying a ink in a model path file.

5. The system as claimed in claim 1, further comprising a deferred linking module for preserving the integrity of the main model, the deferred linking module optionally including a link call-back function for checking that the segment conforms to rules and constraints of the main model.

6. A method of creating a multi-user data model, the method comprising the steps of:
creating nodes to represent components of the multi-user data model;
partitioning the multi-user data model into two or more sub models, a partition of the multi-user data model partitioned created using the steps of:
selecting a node from the multi-user data model; and
separating the node and descendant child nodes of the node into a separate
sub model; and creating links between sub models of the two or more sub models, a link created using the steps of:
creating a reference link on a child node of a first sub model; and
referencing a node of a second sub model in the reference link.

7. The method as claimed in claim 6, wherein one of the two or more sub models is further partitioned into two or more smaller sub models.

8. The method as claimed in claim 6, wherein the step of partitioning includes the steps of:
selecting a node from the data model; and
removing the node and descendent child nodes of the node from the data model.

9. The method as claimed in claim 6, wherein the step of creating a link includes the steps of:
creating a model path file; and
listing XPaths in the model path file.

10. The method as claimed in claim 6, further comprising the steps of:
storing the sub models in one or more sub model files;
storing the reference links in one or more model path files;
designating rules and constraints to the multi-user data model;
allowing a sub model to be modified; and
updating the modified sub model partition of the data model.

11. The method as claimed in claim 10, wherein the steps of storing the sub models and storing the reference links include the step of storing a first sub model file and a first model path file together in a separate repository from a second sub model file and a second model path file.

12. The method as claimed in claim 10, wherein the step of updating the modified sub model partition includes the step of checking that a modified sub model complies with the rules and constraints of the multi-user data model, and wherein the step of updating the modified sub model partition optionally includes one or more of the steps of:
notifying a user of an error in compatibility between the modified sub model partition and the multi-user data model; and
allowing a user to correct an error in compatibility between the modified sub model partition and the multi-user data model.

13. A computer program product for creating a multi-user data model, the computer program product comprising computer readable medium for storing machine-executable instructions for use in the execution in a computer of the integrated installation of software method, the method including the steps of:
partitioning the data model into two or more sub models;
creating links to and from the sub models;
allowing a sub model to be modified;
checking that a modified sub model is compatible with the data model; and
updating the modified sub model partition of the data model.

14. A method of partitioning a main data model into two or more sub-data models, the method comprising the steps of
creating a new project for storing the sub-data models;
copying from the main data model a selected node and its dependent nodes into the new project;
removing the selected node and dependent nodes of the selected node from the main data model; and
establishing a link to the newly created project.

15. A method of linking a first data model to a second data model, the method comprising the steps of:
loading the first data model into a virtual document object model; and
replacing a leaf node of the virtual document object model with a node of the second data model.

16. The method as claimed in claim 15, further comprising the steps of:
selecting a parent folder from the leaf node;
selecting a project directory of the second data model; and
constructing an XPath and a connection string to represent the second data model and the node of the second data model.
